# EUROPÄISCHE PATENTSCHRIFT

(11) **EP 4 150 226 B1**
(45) Veröffentlichungstag und Bekanntmachung des Hinweises auf die Patenterteilung: **10.07.2024**
(21) Anmeldenummer: 21724565.3
(22) Anmeldetag: 30.04.2021
(51) Int. Cl.: F16D 1/08, B23B 31/14, G01M 1/04, B23B 31/117

(54) **BAUTEIL ZUR ANBINDUNG EINER SPANNAUFNAHME AN EINE WELLE**
CONSTRUCTIONAL PART FOR COUPLING A COLLET TO A SHAFT
ÉLÉMENT DE CONSTRUCTION POUR L'ACCOUPLEMENT D'UN DISPOSITIF DE SERRAGE À UN ARBRE

(30) Priorität: 16.05.2020 DE 102020113330
(43) Veröffentlichungstag der Anmeldung: 22.03.2023
(73) Patentinhaber: Schenck RoTec GmbH, 64293 Darmstadt (DE)
(72) Erfinder: GRAEFENSTEIN, Helge, 64283 Darmstadt (DE); BINSACK, Volker, 64331 Weiterstadt (DE)
(74) Vertreter: Haarpatent Patentanwälte Krämer Meyer
(86) Internationale Anmeldenummer: PCT/DE2021/100392
(87) Internationale Veröffentlichungsnummer: WO 2021/233497

(56) Entgegenhaltungen:
- EP-A1- 2 939 772
- WO-A1-00/44519
- CN-A- 103 486 144
- DE-A1- 102015 101 885
- JP-U- S5 513 133
- US-A- 2 739 830
- US-A1- 2002 112 546
- US-A1- 2014 064 841

## Beschreibung

Die Erfindung betrifft ein Bauteil zur Verbindung einer Welle mit einer einen Rotor aufnehmbaren Spannaufnahme, mit einem topfförmigen dünnwandigen Gehäuse, in das die Spannaufnahme einbringbar und dort mittels Befestigungsmittel fixierbar ist.

Um Belastungen zu messen, die auf einen rotierenden Körper wirken, werden Schleuderprüfstände herangezogen, in denen der Körper, wie beispielsweise ein Rotor in seinem Betriebsdrehzahlbereich und auch darüber betrieben wird. Zusätzlich kann der Rotor beispielsweise zyklischen Drehzahländerungen oder Temperaturschwankungen ausgesetzt werden. Der Rotor kann hierbei, z. B. über seinen Wellenzapfen, an einer dünnen, elastischen Welle hängend befestigt und beschleunigt werden. Die Rotoren müssen für diesen Zweck wieder einfach lösbar an der Schleuderwelle befestigbar sein.

Bekannte Rotorspannaufnahmen weisen Fliehkraftsegmente auf, um Einflüsse der Fliehkraft auf die Rotorspannung zu kompensieren.

Aus DE 15 52 197 C ist ein Zentrifugalfutter für hochtourig umlaufende Werkzeuge mit einer Mehrzahl von zu einem Futterbackensatz sich ergänzenden Futterbacken bekannt. Das Zentrifugalfutter weist mit den Futterbacken ausgebildete Fliehgewichte auf, die als zweiarmiger Hebel um einen Hebeldrehpunkt schwenkbar sind. Die Fliehgewichte sind zwischen zwei axial im Abstand voneinander angeordneten Futterbackensätzen angeordnet und jeweils mit einer Futterbacke der beiden Futterbackensätze einstückig ausgebildet. Hierbei springen die Futterbackensätze zur Bildung der Hebeldrehpunkte zwischen ihren Enden radial nach außen vor.

US 2 830 822 A offenbart ein Zentrifugalspannfutter, bei dem mehrere Gewichte um einen Rotor angeordnet sind und sich bei Drehung des Rotors so infolge der Zentrifugalkraft radial nach außen bewegen. Die Gewichte sind weiterhin mit einem Ring verbunden, der in Verbindung mit Klauen steht, die radial beweglich auf dem Rotor angeordnet sind. Durch die infolge der Zentrifugalkraft radial nach außen gerichteten Bewegung der Gewichte werden die Teile des Ringes, die mit den Gewichten verbunden sind, ebenfalls nach außen gedrückt, so dass die mit den dazwischenliegenden Teilen des Ringes verbundenen Klauen zusammengezogen werden.

Aus der DE 42 20 136 C1 ist ein Spannsystem für Werkzeugmaschinen zum Einspannen von rotationsorientierten Werkzeugen und/oder Werkstücken mit einem Futter- oder Grundkörper, einem Spanngetriebe, Grundbacken und Aufsatzbacken bekannt. Die Aufsatzbacken bestehen hierbei zumindest teilweise aus Faserverbundkunststoffen, wobei der Futterkörper, das Spanngetriebe, die Grundbacken und die Schnittstelle zwischen den Grundbacken und den Aufsatzbacken aus einem metallischen Werkstoff gefertigt sind. An der Bandage aus Faserverbundkunststoffen zwischen den Spannelementen sind Fliehkraft-Ausgleichsgewichte so angeordnet sind, dass sie zusammen mit der Bandage aus Faserverbundkunststoffen in radialer Richtung beweglich und in tangentialer Richtung festgelegt sind. Bei zunehmender Drehzahl und damit nach außen zunehmender Fliehkraft wird die Bandage aus Faserverbundkunststoff nach außen bewegt. Da die Bandage aus hochsteifer Kohlenstoffaser hergestellt ist, tritt nur eine geringe Dehnung auf, und die Spannung auf die Spannklötze und das Werkstück in radialer Richtung wird durch die Verformung der Bandage aus Faserverbundkunststoff nach außen erhöht.

Ferner beschreibt DE 198 34 739 C1 eine Spanneinrichtung, bei der ein polygonförmig gestalteter Grundkörper elastisch in eine runde Form gebracht wird. Hierbei werden zwischen den Kraftangriffspunkten gelegene Bereiche des Grundkörpers derart verformt, dass sich die Aufnahme weitet und ein runder Schaft montierbar ist. Sobald die auf den Grundkörper wirkenden Radialkräfte verringert oder sogar aufgehoben werden, kehrt der Grundkörper aufgrund seiner elastischen Eigenschaften in seine polygone Ausgangsform zurück und der Schaft ist in der Aufnahme fixiert. EP 1 669 621 B1 nimmt diese Lehre auf und fügt in Hohlräume, die im Grundkörper vorliegen, Fliehkraftausgleichsgewichte ein, so dass die Fliehkraftausgleichsgewichte aufgrund auftretender Zentrifugalkräfte nach außen gedrückt werden. Hierdurch werden die dazwischenliegenden Bereiche nach innen gebogen und die Spannkraft auf den Schaft wird erhöht.

Um den in einer Spannaufnahme aufgenommenen Rotor mit der Welle zu verbinden, sind Bauteile vorgesehen, die die Gewichtskraft vom Rotor in die Schleuderwelle und das Antriebsmoment von der Welle in den Rotor übertragen.

DE 195 21 755 C1 beschreibt ein Verbindungssystem zum wiederholbaren festen Verbinden zweier Bauteile, bei dem ein Bauteil während des Verbindungsvorganges zeitweise so verformt wird, dass eine wirksame Umfangskontur der entsprechenden wirksamen Umfangskontur des anderen Bauteils mit vorgegebenem Spiel entspricht, und bei dem nach dem Positioniervorgang beider Bauteile durch zumindest teilweise Rückverformung eine feste Druckanlage der beiden wirksamen Umfangskonturen geschieht.

Ferner offenbart DE 196 24 048 A1 eine reibschlüssige Verbindung zweier Bauteile.

DE 907 233 B beschreibt eine durchmesserveränderliche, rohrförmige Werkstückaufnahme für Werkzeugmaschinen, die den Durchmesser des aufzunehmenden Teiles überragende, sich nur über Teile ihres Umfangs erstreckende Spannflächen aufweist, die unter elastischer Verformung der zwischen ihnen liegenden Bereiche der Aufnahme auf den Werkstückdurchmesser einstellbar sind.

US 2 739 830 A offenbart eine Manschette aus einem Außenring und einem gespaltenen, elastischen Innenring, der lose im Außenring sitzt. Der Innenring weist Gewindebohrungen und der Außenring Durchgangsbohrungen für zueinander beabstandete Gewindestifte zur Befestigung der Ringe aneinander und an einer Welle auf, wobei der Innenring auf die Welle passt. Der Außenring kann als eine becherförmige Schale gestaltet sein. Die Gewindestifte werden vollständig gegen die Welle angezogen, so dass die Befestigung des Außenrings an der Welle erreicht wird.

Problematisch bei den bekannten Bauteilen zur Aufnahme einer Spannaufnahme ist, dass durch das Spannen eine Kraft auf die Spannaufnahme ausgeübt wird und es hierdurch zu Fehlmessungen kommen kann. Gerade bei Spannaufnahmen mit Fliehkraftkompensation kann eine derartige Aufnahme die Rundlaufeigenschaft der Spannaufnahme beeinflussen.

Der Erfindung liegt die Aufgabe zugrunde, eine Vorrichtung zur Aufnahme einer Rotorspannaufnahme bereitzustellen, bei der das Spannen des Rotors durch die Spannaufnahme nicht beeinträchtigt wird.

Gelöst wird die Aufgabe durch die Merkmale des Anspruchs 1. Bevorzugte Ausgestaltungen sind in den abhängigen Ansprüchen beschrieben.

Die Aufgabe wird erfindungsgemäß dadurch gelöst, dass ein Bauteil zur Verbindung einer Welle mit einer einen Rotor aufnehmbaren Spannaufnahme bereitgestellt wird, mit einem topfförmigen dünnwandigen Gehäuse, in das die Spannaufnahme einbringbar und dort mittels Befestigungsmittel fixierbar ist, mit an dem Gehäuseboden des Gehäuses vorliegenden Anschlussmitteln zur drehfesten Anbindung des Gehäuses an die Welle, wobei die Befestigungsmittel mit ihrer Grundfläche auf der Außenmantelfläche des Gehäuses angeordnet und durch im Gehäuse vorliegende Bohrungen mit der Spannaufnahme in Eingriff bringbar sind und zumindest eine Aussparung in der Grundfläche aufweisen, so dass sie mit ihrer Grundfläche nur bereichsweise auf der Außenmantelfläche aufliegen, so dass insbesondere beim Fixieren der Spannaufnahme im Gehäuse eine Verformung des Gehäuses unterbleibt. Vorteile der Erfindung sind, dass die einen Rotor aufnehmbare Spannaufnahme im topfförmigen Gehäuse definiert positioniert werden kann und außerdem durch die erfindungsgemäße Art der Befestigung der Spannaufnahme eine Zwangsverformung des Gehäuses verhindert wird. Denn solch eine Zwangsverformung würde gegebenenfalls auch Kräfte auf die Spannaufnahme ausüben und somit in einer Beeinflussung der Spannung bzw. des Löseprozesses des Rotors resultieren. Des Weiteren wird die Rundlaufeigenschaft der Spannaufnahme nicht beeinträchtigt. Gerade bei Spannaufnahmen mit Fliehkraftkompensation hat sich das erfindungsgemäße Bauteil als vorteilhaft erwiesen. Das erfindungsgemäße Bauteil mit seinen Merkmalen stellt sicher, dass zum einen eine stabile Anbindung der Spannaufnahme erreicht wird und Kräfte und Drehmoment spielfrei und steif übertragen werden. Zum anderen besitzt das Gehäuse durch die dünnwandige Ausgestaltung eine gewisse radiale Nachgiebigkeit, so dass auf eine fliehkraftkompensierende Spannaufnahme, genauer auf deren Fliehkraftkomponenten kein Einfluss ausgeübt wird und auch eine Entspannung der Spannaufnahme, durch z. B. Einwirkung einer Kraft von außen auf die Spannaufnahme bzw. das Gehäuse, möglich ist.

In einer Ausgestaltung ist vorgesehen, dass die Befestigungsmittel Klemmböcke und Schrauben umfassen und die Klemmböcke wenigstens eine Aussparung in ihrer Grundfläche aufweisen. Die bevorzugte Befestigung erfolgt derart, dass die Schrauben durch die Klemmböcke bzw. korrespondierende Bohrungen in der Mantelfläche des Gehäuses in entsprechende Bohrungen der Spannaufnahme geschraubt werden. Hierbei werden die Klemmböcke durch die Schrauben an die Außenmantelfläche gedrückt, wobei sich die Grundfläche der Klemmböcke an die Außenmantelfläche des Gehäuses anlegt. Dadurch, dass die Befestigungsmittel, insbesondere die Klemmböcke eine Aussparung in der Grundfläche aufweisen, ergeben sich insbesondere zwei Linienkontakte zwischen der Grundfläche des Klemmbocks und der Außenmantelfläche, was die auf das Gehäuse wirkende Kräfte gleichmäßig verteilt und eine Verformung des Gehäuses verhindert.

Es ist bevorzugt, dass jeder Klemmbock wenigstens eine Durchgangsbohrung für eine Schraube aufweist und die Grundfläche des Klemmbocks im Bereich der Durchgangsbohrung ausgespart ist. Je nach Anwendung ist eine Durchgangsbohrung oder mehrere Durchgangsbohrungen zur Durchführung einer Schraube oder mehrerer Schrauben in einem Klemmbock vorgesehen. In dem Bereich der Grundfläche des Klemmbocks, in den die

Durchgangsbohrung mündet, liegt insbesondere die Aussparung vor, die insbesondere einen Durchmesser aufweist, der größer ist als der Durchmesser der Durchgangsbohrung. Die Aussparung kann beispielsweise gefräst sein, so dass ein Spalt zwischen Durchgangsbohrung und Außenmantelfläche besteht.

In einer Ausgestaltung ist vorgesehen, dass die Klemmböcke eine rechteckige Form aufweisen und derart auf der Außenmantelfläche angeordnet sind, dass ihre Längsachse koaxial zur Längsachse des Gehäuses liegt. Eine rechteckige Form der Klemmböcke hat sich als vorteilhaft erwiesen, wobei auch andere Formen, wie z. B. runde oder mehreckige Klemmböcke möglich sind. Derart gestaltete Klemmböcke weisen entsprechende Aussparungen in ihrer Grundfläche auf, so dass sie nur bereichsweise mit ihrer Grundfläche auf der Außenmantelfläche aufliegen.

Es hat sich als vorteilhaft herausgestellt, dass sich die Aussparung der Grundfläche entlang der Längsachse über die Gesamtlänge eines Klemmbocks erstreckt und deren Breite größer als der Durchmesser einer Durchgangsbohrung ist. Die Aussparung erstreckt sich also - je nach Ausgestaltung des Klemmbocks - über die Gesamtlänge und/oder -breite des Klemmbocks. Die Breite der Aussparung kann sich nach der Form des Klemmbocks richten, wobei bevorzugt ist, dass die Grundfläche eines Klemmbocks zumindest im Bereich der Durchgangsbohrung ausgespart ist.

Je nach Rotorgewicht bzw. anvisierter Drehzahl kann es vorteilhaft sein, dass mehrere Durchgangsbohrungen in den Klemmböcken entlang der Längsachse vorliegen, so dass eine sichere Verbindung zwischen Bauteil und Spannaufnahme hergestellt werden kann, die auch hohe Belastungen aushält. Die Befestigung der Spannaufnahme im Bauteil kann sich nach dem von der Spannaufnahme aufgenommenen Rotortyp bzw. der anvisierten Drehzahl richten, so dass für bestimmte Anwendungen es als ausreichend angesehen werden kann, dass das Bauteil mindestens drei zueinander beabstandet an der Außenmantelfläche angeordnete Befestigungsmittel umfasst. Für bestimmte Anwendungen können entsprechend auch mehr als drei an der Außenmantelfläche angeordnete Befestigungsmittel vorgesehen sein.

Das Gehäuse weist an seinem Gehäuseboden Anschlussmitteln zur drehfesten Anbindung des Gehäuses an die Welle auf. Bei den Anschlussmitteln kann es sich beispielsweise um Aufnahmen oder Ausnehmungen handeln, mit denen entsprechende Verbindungsmittel der Welle verbindbar sind. Die Verbindungsmittel der Welle können in die entsprechenden Aufnahmen oder Ausnehmungen des Gehäusebodens mittels Schrauben befestigt werden.

In einer Ausgestaltung ist vorgesehen, dass es sich bei dem Gehäuse um einen dünnwandigen Topf handelt, der eine gewisse radiale Nachgiebigkeit aufweist und somit die Fliehkraftkompensation bzw. den Spannprozess der Spannaufnahme nicht beeinträchtigt. Die Geometrie eines dünnwandigen Topfes hat des Weiteren eine ausreichend hohe Torsionssteifigkeit. Insbesondere ist es vorteilhaft, dass die Gehäusewand eine Dicke von 0,3 mm bis 3 mm aufweist. Es hat sich gezeigt, dass eine Wandstärke in diesem Bereich zum einen eine ausreichende Stabilität und zum anderen eine ausreichende Flexibilität aufweist.

Um einen ausreichenden Kontakt zwischen Grundfläche der Klemmböcke und Außenmantelfläche des Gehäuses herzustellen, können in einer bevorzugten Ausgestaltung die Grundflächen der Klemmböcke konkav oder eben geformt sein.

Die Erfindung wird nachfolgend anhand eines Ausführungsbeispiels der Erfindung näher erläutert, das in der Zeichnung dargestellt ist. Es zeigen
- Figur 1: eine perspektivische Ansicht eines topfförmigen Bauteils mit integrierter Spannaufnahme,
- Figur 2: ein Längsschnitt des Bauteils gemäß Figur 1 und
- Figur 3: eine vergrößerte Ansicht eines Klemmbocks.

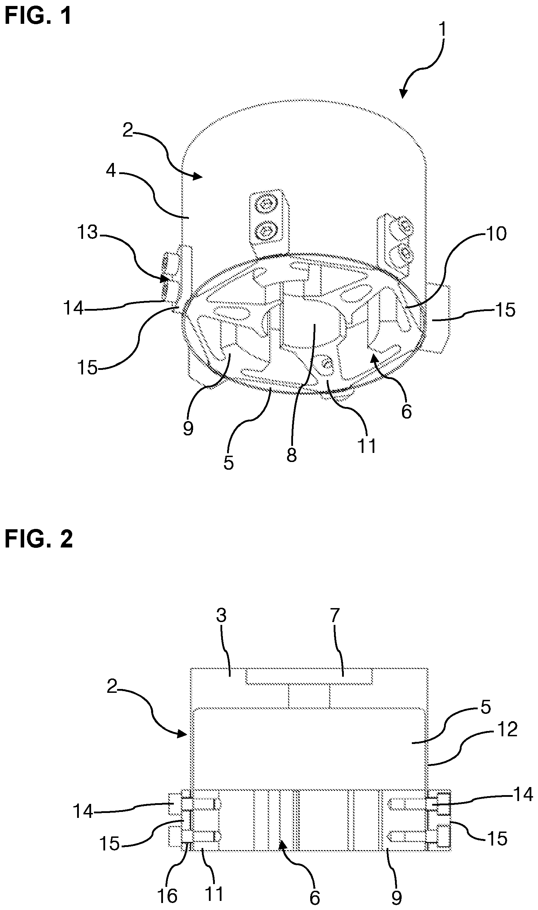

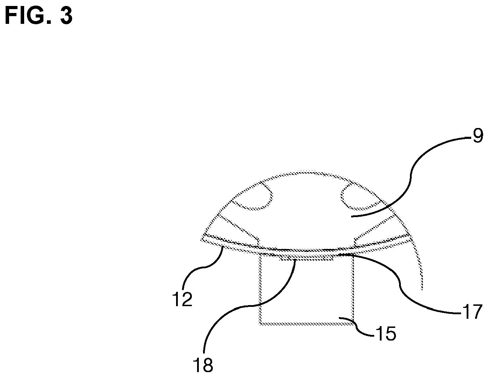

Figur 1 zeigt eine perspektivische Ansicht eines topfförmigen Bauteils mit integrierter Spannaufnahme, Figur 2 ein Längsschnitt des Bauteils gemäß Figur 1 und Figur 3 stellt eine vergrößerte Ansicht eines Klemmbocks dar. Das topfförmige Bauteil 1 weist ein hohlzylinderförmiges Gehäuse 2 mit einem Gehäuseboden 3 auf, dass mit seiner Mantelfläche 4 einen Raum 5 zur Aufnahme einer Spannaufnahme 6 formt. Die Spannaufnahme 6 kann über die offene Seite des Gehäuses 2 in einfacher Weise eingebracht werden. Die Mantelfläche 4 des Gehäuses 2 ist dünnwandig ausgestaltet und kann beispielsweise aus einem Metallblech bestehen, so dass das Bauteil 1 ein geringes Gewicht und zum anderen eine hohe Torsionssteifigkeit besitzt.

An dem Gehäuseboden 3 sind Anschlussmittel 7 vorgesehen, mit der das Bauteil 1 mit einem Drehantrieb verbindbar ist, indem zum Beispiel eine als Verbindungsmittel ausgestaltete Flanschverbindung einer mit dem Antrieb verbundenen Welle in das entsprechende als Aufnahme oder Ausnehmung gestaltete Anschlussmittel 7 im Gehäuseboden 3 drehfest verschraubt wird. Bei einer solchen Welle kann es sich beispielsweise um eine dünne, elastische Schleuderwelle handeln, die hängend in einem Schleuderstand zum Antrieb eines Rotors verwendet wird.

Die exemplarisch gezeigte Spannaufnahme 6 besitzt eine mittige Aufnahme 8 für einen Rotor bzw. einen Rotorzapfen. Bei der dargestellten Spannaufnahme 6 handelt es sich um eine fliehkraftkompensierende Spannaufnahme 6, bei der sich Fliehkraftsegmente 9 nach außen weiten und dabei über Blattfedern 10 Spannsegmente 11 zum Spannen des Rotors nach innen drücken. Entspannt werden kann der aufgenommene Rotor dadurch, indem von außen auf die Fliehkraftsegmente 9 in Richtung der Aufnahme 8 eine Kraft ausgeübt wird und dadurch die Spannsegmente 11 über die Blattfedern 10 nach außen bewegt werden. Hierbei handelt es sich lediglich um eine beispielhafte Spannaufnahme, da das erfindungsgemäße Bauteil für eine Vielzahl von unterschiedlich gestalteten Spannaufnahmen vorgesehen ist, bei denen eine Beeinträchtigung des Entspann- oder Spannprozesses durch das die Spannaufnahme aufnehmende Bauteil verhindert werden soll. Besonders geeignet ist das Bauteil für fliehkraftkompensierende Spannaufnahmen.

Um die Spannaufnahme 6 im Gehäuse 2 zu fixieren, sind an der Außenmantelfläche 12 Befestigungsmittel 13 beabstandet zueinander angeordnet. Die Befestigungsmittel 13 sind im dargestellten Beispiel nahe dem offenen Topfende angeordnet, so dass der Schwerpunkt des Bauteils 1 in geringem Abstand zur Spannebene liegt. Die Befestigungsmittel 13 können Schrauben 14 und Klemmböcke 15 umfassen. Die Schrauben 14 ragen durch Durchgangsbohrungen 16 in den Klemmböcken 15 sowie korrespondierende Bohrungen im Gehäuse hindurch und werden mit entsprechenden Bohrungen in der Spannaufnahme 6 in Eingriff gebracht. Hierfür können je nach Ausgestaltung der Spannaufnahme 6 unterschiedlich platzierte Bohrungen im Gehäuse 2 sowie der Spannaufnahme 6 vorgesehen sein. Der Schraubenkopf kann auf der Oberfläche der Klemmböcke 15 aufliegen oder je nach Ausgestaltung des Klemmbocks 15 im Klemmbock 15 versenkt sein. In der dargestellten Ausgestaltung ist vorgesehen, dass die Spannaufnahme 6 drei Fliehkraftsegmente 9 und drei Spannsegmente 11 aufweist und je ein Befestigungsmittel 13 für die Befestigung eines Segments 9, 11 vorgesehen ist. Das heißt, jedes Segment 9, 11 ist insbesondere an dem Gehäuse 2 befestigt.

Die Klemmböcke 15 sind im dargestellten Beispiel rechteckig ausgestaltet und liegen mit ihrer Längsachse koaxial zur Längsachse des Gehäuses 2. Jeweils zwei Durchgangsbohrungen 16 sind entlang der Längsachse eines jeden Klemmbocks 15 angeordnet und werden von zwei Schrauben 14 durchragt. Je nach Rotortyp bzw. anvisierter Drehzahl können mehr oder weniger Schrauben 14 verwendet werden. Auch Klemmböcke mit nur einer Bohrung sind möglich. Im dargestellten Beispiel sind sechs Klemmböcke 15 an der Außenmantelfläche 12 des Gehäuses 2 angeordnet, wobei je nach Spannaufnahme mehr oder weniger Klemmböcke 15 möglich sind. Um die Fliehkraftsegmente 9 und/oder Spannsegmente 11 am Gehäuse 2 zu befestigen, können unterschiedlich lange Schrauben 14 verwendet werden. In der dargestellten Ausgestaltung sind beispielsweise die Fliehkraftsegmente 9 mittels längeren Schrauben 14 befestigt als die Spannsegmente 11. Dies kann jedoch je nach Ausgestaltung der Spannaufnahme 6 variieren.

Die Klemmböcke 15 liegen mit ihrer Grundfläche 17 auf der Außenmantelfläche 12 des Gehäuses 2 auf, wobei in der Grundfläche 17 mindestens eine Aussparung 18 vorgesehen ist, wie in Figur 3 gezeigt. Je nach Ausgestaltung der Klemmböcke 15, das heißt je nachdem wie viele Durchgangsbohrungen 16 ein Klemmbock 15 aufweist, kann entsprechend auch nur eine Aussparung 18 in der Grundfläche 17 vorliegen. Es ist bevorzugt, dass die Grundfläche 17 in dem Bereich eine Aussparung 18 aufweist, in dem die Durchgangsbohrung 16 mündet, so dass zwischen Durchgangsbohrung 16 und Außenmantelfläche 12 ein Spalt vorliegt. Die Aussparung 18 eines Klemmbocks 15 kann sich in Richtung seiner Längsachse über seine gesamte Grundfläche 17 erstrecken, wobei die Breite der Aussparung 18 mindestens dem Durchmesser der Durchgangsbohrung 16 entspricht. Die Aussparungen 18 weisen vorteilhafterweise eine gleichbleibende Höhe bzw. Tiefe auf.

Zur Fixierung der Spannaufnahme 6 im Bauteil 1 werden die Schrauben 14 durch die Klemmböcke 15 in die im Gehäuse 2 aufgenommene Spannaufnahme 6 geschraubt und drücken hierbei die Klemmböcke 15 an die Außenmantelfläche 12 des Gehäuses 2. Dadurch, dass die Grundfläche 17 der Klemmböcke 15 insbesondere mittig ausgespart ist, ergeben sich zwei Linienkontakte zwischen Klemmbock 15 und Außenmantelfläche 12, so dass der Klemmbock 15 nur bereichsweise auf der Außenmantelfläche 12 des Gehäuses 2 aufliegt. Der Klemmbock 15 liegt also nicht im Bereich der Durchgangsbohrung 16 auf der Außenmantelfläche 12 auf, sondern im Randbereich. Hierdurch wird das topfförmiges Gehäuse 2 nicht zwangsverformt, was andernfalls Zwangskräfte auf die Spannaufnahme 6 aufbringen und die Rundlaufgenauigkeit der Spannaufnahme 6 reduzieren würde. Außerdem besitzt das Bauteil 1 zusammen mit der Spannaufnahme 6 ein hohes Flächenträgheitsmoment in alle Raumrichtungen und gewährleistet somit eine hohe Steifigkeit und folglich eine definierte Lage der Spannaufnahme 6.

Weitere Vorteile der Erfindung sind unter anderem, dass durch die Geometrie des Bauteils 1 eine hohe Torsionssteifigkeit erreicht wird, aber das Bauteil 1 durch seine dünnwandige Ausgestaltung eine radiale Nachgiebigkeit besitzt, die die Spannaufnahme 6 nicht nachteilig beeinflusst, sondern vielmehr gewisse radiale Bewegungen der Spannaufnahme 8 zulässt. Hierdurch wird die Wirkung der Fliehkräfte auf die Spannaufnahme 8 nicht nachteilig beeinflusst und der Rotor bzw. Rotorzapfen wird zuverlässig gespannt.

Das erfindungsgemäße Bauteil 1 ist zwar radial nachgiebig, kann aber eine Spannaufnahme 6 durch die erfindungsgemäßen Befestigungsmittel 13 in allen erforderlichen Weg-/Winkelrichtungen steif anbinden. Im Detail hat sich gezeigt, dass das Bauteil 1 vorteilhafterweise folgende Bewegungen der Spannaufnahme 8 ermöglicht:
- Die Schwerpunkte der Fliehkraftsegmente 9 werden durch die Fliehkraft nach außengedrückt, wodurch die Spannkraft mit zunehmender Drehzahl erhöht wird.
- Zum Entspannen kann das Bauteil 1 und folglich die Spannaufnahme 8 durch eine äußere Kraft verformt werden, so dass sich die innere Verspannung löst und der gespannte Rotor entnommen werden kann.
- Nach dem Spannvorgang kann sich das Bauteil 1 wieder in seine ursprüngliche Form zurück verformen und eine hohe Rundlaufgenauigkeit aufweisen.

## Patentansprüche

1. Bauteil (1) zur Verbindung einer Welle mit einer einen Rotor aufnehmbaren Spannaufnahme (6), mit einem topfförmigen dünnwandigen Gehäuse (2), in das die Spannaufnahme (6) einbringbar und dort mittels Befestigungsmittel (13) fixierbar ist, mit an dem Gehäuseboden (3) des Gehäuses (2) vorliegenden Anschlussmitteln (7) zur drehfesten Anbindung des Gehäuses (2) an die Welle, **dadurch gekennzeichnet, daß** die Befestigungsmittel (13) mit ihrer Grundfläche (17) auf der Außenmantelfläche (12) des Gehäuses (2) angeordnet und durch im Gehäuse (2) vorliegende Bohrungen mit der Spannaufnahme (6) in Eingriff bringbar sind und zumindest eine Aussparung (18) in der Grundfläche (17) aufweisen, so dass sie mit ihrer Grundfläche (17) nur bereichsweise auf der Außenmantelfläche (12) aufliegen.

2. Bauteil (1) nach Anspruch 1, **dadurch gekennzeichnet, dass** die Befestigungsmittel (13) Klemmböcke (15) und Schrauben (14) umfassen und die Klemmböcke (15) die zumindest eine Aussparung (18) in ihrer Grundfläche (17) aufweisen.

3. Bauteil (1) nach Anspruch 2, **dadurch gekennzeichnet, dass** jeder Klemmbock (15) wenigstens eine Durchgangsbohrung (16) für die Schraube (14) aufweist und die Grundfläche (17) im Bereich der Durchgangsbohrung (16) ausgespart ist.

4. Bauteil (1) nach Anspruch 3, **dadurch gekennzeichnet, dass** die Aussparungen (18) jeweils einen Durchmesser aufweisen, der größer als der Durchmesser der Durchgangsbohrung (16) ist.

5. Bauteil (1) nach Anspruch 2, **dadurch gekennzeichnet, dass** die Klemmböcke (15) eine rechteckige Form aufweisen und derart auf der Außenmantelfläche (12) angeordnet sind, dass ihre Längsachse koaxial zur Längsachse des Gehäuses (2) liegt.

6. Bauteil (1) nach Anspruch 5, **dadurch gekennzeichnet, dass** sich die Aussparung (18) der Grundfläche (17) entlang der Längsachse über die Gesamtlänge des Klemmbocks (15) erstreckt und deren Breite größer als der Durchmesser der Durchgangsbohrung (16) ist.

7. Bauteil (1) nach Anspruch 3, **dadurch gekennzeichnet, dass** mehrere Durchgangsbohrungen (16) in den Klemmböcken (15) entlang der Längsachse vorliegen.

8. Bauteil (1) nach einem der vorhergehenden Ansprüche, **dadurch gekennzeichnet, dass** die Anschlussmittel (7) Aufnahmen oder Ausnehmungen sind, mit denen entsprechende Verbindungsmittel der Welle verbindbar sind.

9. Bauteil (1) nach einem der vorhergehenden Ansprüche, **dadurch gekennzeichnet, dass** die Gehäusewand eine Dicke von 0,3 mm bis 3 mm aufweist.

10. Bauteil (1) nach einem der vorhergehenden Ansprüche, **dadurch gekennzeichnet, dass** das Bauteil (1) mindestens drei zueinander beabstandet an der Außenmantelfläche (12) angeordnete Befestigungsmittel (13) umfasst.

11. Bauteil (1) nach Anspruch 2, **dadurch gekennzeichnet, dass** die Grundfläche (17) der Klemmböcke (15) konkav oder eben geformt ist.

## Claims

1. Component (1) for connecting a shaft to a clamping holder (6) that can receive a rotor, the component having a cup-shaped, thin-walled housing (2) into which the clamping holder (6) can be inserted, and can there be fixed by means of fastening means (13), having on the housing base (3) of the housing (2) connection means (7) for connecting the housing (2) to the shaft in a torque-proof manner, **characterized in that** the fastening means (13) are arranged with their base surface (17) on the outer lateral surface (12) of the housing (2) and can be brought into engagement with the clamping holder (6) by means of bores present in the housing (2), and have at least one recess (18) in the base surface (17), such that they rest with their base surface (17) on the outer lateral surface (12) only in some regions.

2. Component (1) according to claim 1, **characterized in that** the fastening means (13) comprise clamping blocks (15) and screws (14), and the clamping blocks (15) have the at least one recess (18) in their base surface (17).

3. Component (1) according to claim 2, **characterized in that** each clamping block (15) has at least one through-hole (16) for the screw (14), and the base surface (17) is cut out in the region of the through-hole (16).

4. Component (1) according to claim 3, **characterized in that** the recesses (18) each have a diameter that is greater than the diameter of the through-hole (16).

5. Component (1) according to claim 2, **characterized in that** the clamping blocks (15) have a rectangular shape and are arranged on the outer lateral surface (12) in such a manner that their longitudinal axis is coaxial with the longitudinal axis of the housing (2).

6. Component (1) according to claim 5, **characterized in that** the recess (18) of the base surface (17) extends along the longitudinal axis over the entire length of the clamping block (15), and its width is greater than the diameter of the through-hole (16).

7. Component (1) according to claim 3, **characterized in that** several through-holes (16) are present in the clamping blocks (15) along the longitudinal axis.

8. Component (1) according to one of the preceding claims, **characterized in that** the connection means (7) are receptacles or recesses to which corresponding connecting means of the shaft can be connected.

9. Component (1) according to one of the preceding claims, **characterized in that** the housing wall has a thickness of 0.3 mm to 3 mm.

10. Component (1) according to one of the preceding claims, **characterized in that** the component (1) comprises at least three fastening means (13) arranged at a distance from one another on the outer lateral surface (12).

11. Component (1) according to claim 2, **characterized in that** the base surface (17) of the clamping blocks (15) is concave or flat in shape.

## Revendications

1. Composant (1) pour relier un arbre à un logement de serrage (6) pouvant recevoir un rotor, avec un boîtier (2) en forme de pot à paroi mince dans lequel le logement de serrage (6) peut être introduit et fixé à l'aide de moyens de fixation (13), avec des moyens de raccordement (7) présents sur le fond de boîtier (3) du boîtier (2) pour relier le boîtier (2) à l'arbre de manière solidaire en rotation, **caractérisé en ce que** les moyens de fixation (13) sont disposés avec leur surface de base (17) sur la surface d'enveloppe extérieure (12) du boîtier (2) et peuvent être amenés en prise avec le logement de serrage (6) par le biais d'alésages présents dans le boîtier (2) et sont munis d'au moins un évidement (18) dans la surface de base (17) de sorte qu'ils ne reposent avec leur surface de base (17) que par zones sur la surface d'enveloppe extérieure (12).

2. Composant (1) selon la revendication 1, **caractérisé en ce que** les moyens de fixation (13) comprennent des blocs de serrage (15) et des vis (14), et les blocs de serrage (15) sont munis dudit au moins un évidement (18) dans leur surface de base (17).

3. Composant (1) selon la revendication 2, **caractérisé en ce que** chaque bloc de serrage (15) est muni d'au moins un trou de passage (16) pour la vis (14), et la surface de base (17) est évidée au niveau du trou de passage (16).

4. Composant (1) selon la revendication 3, **caractérisé en ce que** les évidements (18) présentent chacun un diamètre supérieur au diamètre du trou de passage (16).

5. Composant (1) selon la revendication 2, **caractérisé en ce que** les blocs de serrage (15) sont de forme rectangulaire et sont disposés sur la surface d'enveloppe extérieure (12) de telle sorte que leur axe longitudinal soit coaxial à l'axe longitudinal du boîtier (2).

6. Composant (1) selon la revendication 5, **caractérisé en ce que** l'évidement (18) de la surface de base (17) s'étend le long de l'axe longitudinal sur toute la longueur du bloc de serrage (15), et sa largeur est supérieure au diamètre du trou de passage (16).

7. Composant (1) selon la revendication 3, **caractérisé en ce que** plusieurs trous de passage (16) sont présents dans les blocs de serrage (15) le long de l'axe longitudinal.

8. Composant (1) selon l'une des revendications précédentes, **caractérisé en ce que** les moyens de raccordement (7) sont des logements ou des évidements avec lesquels peuvent être raccordés des moyens de raccordement correspondants de l'arbre.

9. Composant (1) selon l'une des revendications précédentes, **caractérisé en ce que** la paroi de boîtier présente une épaisseur comprise entre 0,3 mm et 3 mm.

10. Composant (1) selon l'une des revendications précédentes, **caractérisé en ce que** le composant (1) comprend au moins trois moyens de fixation (13) disposés à distance les uns des autres sur la surface d'enveloppe extérieure (12).

11. Composant (1) selon la revendication 2, **caractérisé en ce que** la surface de base (17) du bloc de serrage (15) est concave ou plane.
